Europäisches Patentamt

European Patent Office

Office européen des brevets

(19)

(11) Veröffentlichungsnummer: **0 263 939 B1**

(12) **EUROPÄISCHE PATENTSCHRIFT**

(45) Veröffentlichungstag der Patentschrift: **27.11.91**

(51) Int. Cl.⁵: **C08F 122/06**, C08F 2/08

(21) Anmeldenummer: **87111668.7**

(22) Anmeldetag: **12.08.87**

Die Akte enthält technische Angaben, die nach dem Eingang der Anmeldung eingereicht wurden und die nicht in dieser Patentschrift enthalten sind.

(54) **Verfahren zur Herstellung von Polymaleinsäureanhydridpulver.**

(30) Priorität: **14.10.86 DE 3634956**

(43) Veröffentlichungstag der Anmeldung:
**20.04.88 Patentblatt 88/16**

(45) Bekanntmachung des Hinweises auf die
Patenterteilung:
**27.11.91 Patentblatt 91/48**

(84) Benannte Vertragsstaaten:
**DE FR GB IT NL**

(56) Entgegenhaltungen:
**EP-A- 0 260 386**
**BE-A- 649 881**
**DE-A- 1 162 083**
**GB-A- 987 751**

(73) Patentinhaber: **HÜLS AKTIENGESELLSCHAFT**
**Patentabteilung / PB 15 - Postfach 13 20**
**W-4370 Marl 1(DE)**

(72) Erfinder: **Scholz, Bernhard-Peter, Dr.**
**Clemensstrasse 5**
**W-4353 Oer-Erkenschwick(DE)**

**Beschreibung**

Die Erfindung betrifft ein Verfahren zur Herstellung von pulverförmigem Polymaleinsäureanhydrid (Poly-MSA) durch Polymerisation von Maleinsäureanhydrid (MSA) in Gegenwart von Radikale bildenden Verbindungen in einem organischen Lösemittel.

Die Copolymerisation von MSA mit Olefinen ist seit langem bekannt. Dagegen erschienen erst ab 1961 Arbeiten [z. B. Makromolekulare Chemie 53 (1962), 33], wonach MSA auch alleine durch UV-Bestrahlung oder durch Initiierung mit organischen Peroxiden polymerisiert werden kann.

In EP 0 009 171 wird eine Polymerisation von MSA in Acetanhydrid durch Wasserstoffperoxid vorgeschlagen. Da dabei gleichzeitig die Anhydridgruppen hydrolysiert werden, liefert dieses Verfahren direkt Polymaleinsäure. Bei Ersatz von Acetanhydrid durch Toluol werden nur sehr dunkelfarbige Polymere erhalten.

Aus US-PS 3 708 436 ist die Polymerisation von MSA in hochprozentigen toluolischen Lösungen mit Hilfe von Dibenzoylperoxid bekannt. Bei diesem Verfahren fällt Poly-MSA als feste Masse an. Die Ausbeuten liegen bei 35 bis 60 %.

Nach GB-PS 1 193 146 wird MSA in 15- bis 50%igen toluolischen Lösungen mit Hilfe von Dibenzoylperoxid polymerisiert. Hier fällt das Polymer als schwarzer Teer an. Durch Umfällung kann das Produkt kristallisiert werden.

In US-PS 3 919 258 wird MSA in Xylol durch 15 bis 40 % Di-tert.-butylperoxid, bezogen auf MSA, bei 120 bis 145 °C zu Poly-MSA polymerisiert. Poly-MSA wird dabei als hellbraune Flüssigkeit isoliert, aus der durch Umfällung ein cremefarbenes Pulver erhalten werden kann.

Nach DE-PS 11 62 083 kann MSA in verdünnten Lösungen von inerten Lösemitteln, wobei Benzol bevorzugt wird, polymerisiert werden. Die Produkte fallen als feindisperse Pulver an. Sie werden filtriert und vorzugsweise durch Etherextraktion gereinigt. Bei der Polymerisation wird überwiegend Dicyclohexylpercarbonat als Radikalbildner verwendet. Dibenzoylperoxid ist danach weniger reaktiv und liefert trotz Aktivierung mit Kobaltoleat das Poly-MSA in vergleichsweise geringen Ausbeuten.

Die bekannten Verfahren zur Polymerisation von MSA haben demnach folgende Eigenschaften:
- Aus toluolischen Lösungen wird Poly-MSA nur als feste Masse oder als Flüssigkeit erhalten.
- Die Polymerisation in Xylol erfordert hohe Starterkonzentrationen. Poly-MSA fällt dabei als Flüssigkeit an, aus der durch Umfällung ein Pulver erhalten werden kann.
- Bei der Polymerisation in Benzol kann bei niedriger Konzentrationen Poly-MSA als Pulver gefällt werden.

Die Aufgabe der Erfindung war es, ein Verfahren zur Herstellung von pulverförmigem Poly-MSA zur Verfügung zu stellen, bei dem auch weniger reaktive Radikalbildner hohe Ausbeuten liefern.

Die Aufgabe wird erfindungsgemäß dadurch gelöst, daß man die Polymerisation in einem aromatischen Lösemittel in Gegenwart eines Dispersionsmittels durchführt, dabei eine 36- bis 50%ige MSA-Lösung einsetzt, weniger als 20 %, bezogen auf MSA, Radikalbildner zusetzt und nach der Polymerisation das pulverförmige Produkt abtrennt.

Geeignete aromatische Lösemittel sind Benzol, Toluol, Xylol sowie auch andere Alkylbenzole. Vorzugsweise wird Toluol als Lösemittel für MSA verwendet.

Die Reaktionstemperatur liegt im allgemeinen bei 85 bis 120 °C.

Geeignete Dispersionsmittel sind Ethylen-Vinylacetat-Copolmere.

Man verwendet diese Dispersionsmittel in Konzentrationen bis zu 15 %, bezogen auf MSA. Vorzugsweise liegt die Konzentration im Bereich von 0,3 bis 5 %.

Als Radikale liefernde Verbindungen können Diisopropylpercarbonat, Dicyclohexylpercarbonat, Dilauroylperoxid oder Dibenzoylperoxid verwendet werden. Bevorzugt verwendet man Dibenzoylperoxid.

Vorzugsweise wird der Radikalbildner in Mengen von 5 bis 15 % in die MSA-Lösung gegeben.

Der Radikalbildner wird im allgemeinen in gelöster Form während der gesamten Reaktionszeit kontinuierlich oder portionsweise zugegeben. Nach beendeter Zugabe wird während der Nachreaktionszeit die Polymerisation vervollständigt.

Im Anschluß daran wird das als Pulver angefallene Poly-MSA durch Zentrifugieren, Dekantieren oder Filtrieren abgetrennt. Vorzugsweise gewinnt man das Polymer durch Filtrieren.

Durch das erfindungsgemäße Verfahren wird bei Verwendung vergleichsweise geringer Radikalbildnermengen und ohne zusätzlichen Aktivator MSA mit hohen Umsätzen zu Poly-MSA polymerisiert. Es können konzentrierte MSA-Lösungen eingesetzt werden. Die Produkte fallen als Pulver an und können deshalb in einfacher Weise abgetrennt werden. Außerdem können farblose oder nur schwach beige oder rosa gefärbte Pulver erhalten werden, die für ihre weitere Verwendung keine Umfällung oder Extraktion erfordern.

Das hier hergestellte Poly-MSA ist als Inkrustinationsinhibitor (Antiscalant) und als Waschkraftverstärker (Cobuilder) geeignet.

Die Erfindung wird an den folgenden Beispielen verdeutlicht.

Beispiel 1

In einem 1-1-Kolben werden 187,5 g MSA, 375 ml Toluol und 1,88 g LEVAPREN[R] 500 (Ethylen-Vinylacetat-Copolymer von Bayer AG, D-5090 Leverkusen) vorgelegt. Unter Stickstoff wird auf 90 °C aufgeheizt. Dann werden innerhalb von 5 Stunden 13,5 g (= 3 Mol-%) entwässertes Dibenzoylperoxid in 187,5 ml Toluol zugetropft. Anschließend wird 10 Stunden nachgerührt. Die zu Beginn klare toluolische MSA-Lösung wird nach Zugabe von ca. 10 % der Peroxidmenge trübe. Es bildet sich eine schwach rosa gefärbte, milchartige Dispersion. Am Ende der Nachreaktionszeit wird pulverförmiges Poly-MSA filtriert.

In einem Parallelversuch wird der Umsatz wie folgt bestimmt:

Am Ende der Nachreaktionszeit werden 350 ml Wasser zugesetzt. Man rührt dann eine Stunde bei 90 °C, kühlt auf Raumtemperatur und trennt die Phasen. Die wäßrige Phase wird eingedampft. Im Rückstand wird Maleinsäure polarographisch bestimmt. Aus dem Maleinsäuregehalt wird der MSA-Umsatz berechnet.

MSA-Umsatz: 86%

Vergleichsbeispiel A

Es wird wie in Beispiel 1 verfahren, jedoch wird kein LEVAPREN[R] 500 zugesetzt. Während der Zugabe von Dibenzoylperoxid bildet sich eine zweite, kontinuierliche Phase aus, die sich als braunes Öl am Boden des Reaktionskolbens absetzt. Die Toluolphase wird abdekantiert.

Nach polarographischer Maleinsäurebestimmung wird ein MSA-Umsatz von 65 % berechnet.

Beispiele 2 und 3. Vergleichsbeispiele B und C

Bei dieser Versuchsreihe, die in einem 12-l-V₄A-Doppelmantelrührwerks-behälter mit einem Impellerrührer (250 Upm) durchgeführt wird, werden die in Tabelle 1 angegebenen Mengen eingesetzt.

Nach Vorlage von MSA, Toluol und gegebenenfalls LEVAPREN[R] 500 wird unter Stickstoff auf 95 °C aufgeheizt. Dann wird innerhalb von 8 Stunden entwässertes Dibenzoylperoxid in Toluol zudosiert. Anschließend wird 10 Stunden nachgerührt. Danach wird in den Beispielen 2 und 3 pulverförmiges Poly-MSA durch Filtration isoliert. Die Vergleichsbeispiele B und C liefern dagegen Poly-MSA als braune feste Masse.

In Parallelversuchen werden am Ende der Nachrührzeit jeweils 3 000 ml Wasser zugesetzt, worauf 2 Stunden bei 90 °C nachgerührt und dann auf Raumtemperatur abgekühlt wird. Bei Raumtemperatur werden organische und wäßrige Phase getrennt. In den wäßrigen Phasen bestimmt man durch Polarographie den Maleinsäuregehalt und berechnet daraus den MSA-Umsatz.

<u>Tabelle 1</u>

| Bsp. | Vorlage | | | Dosierung[1) | | Maleinsäure, bez. auf eingesetztes MSA (Mol-%) | MSA-Umsatz (%) |
| | MSA (g) | Toluol (ml) | LEVAPREN[R] 500 (g) | BPO (g) | Toluol (ml) | | |
|---|---|---|---|---|---|---|---|
| 2 | 2 000 | 4 000 | 30 | 144,2 (3 Mol-%) | 1 500 | 3,9 | 96,1 |
| 3 | 2 000 | 3 000 | 30 | 240,4 (5 Mol-%) | 2 500 | 1,9 | 98,1 |
| B | 2 000 | 4 000 | 0 | 144,2 (3 Mol-%) | 1 500 | 11,2 | 88,8 |
| C | 2 000 | 3 000 | 0 | 240,4 (5 Mol-%) | 2 500 | 8,9 | 91,1 |

1) BPO = Dibenzoylperoxid; 2) BLO = Dilauroylperoxid

Beispiel 4

In einem 40-1-$V_4$A-Doppelmantelrührwerksbehälter werden 6 600 g MSA, 12 000 ml Toluol und 99 g LEVAPREN[R] 500 vorgelegt. Der Reaktor wird mit Stickstoff gespült und auf 95 °C aufgeheizt. Innerhalb von 8 Stunden werden dann 476 g entwässertes Dibenzoylperoxid in 6 650 ml Toluol konstant zudosiert. Es wird 12 Stunden nachgerührt und dann auf Raumtemperatur abgekühlt. Das Produkt wird in einen Weißblechbehälter ausgefahren.

Aus der bräunlichen Toluollösung setzt sich langsam ein leicht rosa gefärbtes, flockiges Produkt ab. Das Produkt wird über eine Nutsche abgesaugt und dann im Trockenschrank (200 mbar) bei 40 °C unter leichtem Stickstoffstrom getrocknet.

Ausbeute:  6 220 g Poly-MSA
Umsatz:  93,5 %

**Patentansprüche**

1. Verfahren zur Herstellung pulverförmiger Polymaleinsäureanhydride aus Lösungen von Maleinsäureanhydrid bei dem man die Polymerisation in einem aromatischen Lösemittel durchführt, dabei eine 36- bis 50%ige Maleinsäureanhydridlösung einsetzt, weniger als 20 %, bezogen auf Maleinsäureanhydrid, Radikalbildner zusetzt und nach der Reaktion das Homopolymer als Pulver abtrennt, dadurch gekennzeichnet, daß man die Polymerisation in Gegenwart eins Dispersionsmittels durchführt.

2. Verfahren nach Anspruch 1,
dadurch gekennzeichnet,
daß man die Polymerisation mit Dibenzoylperoxid durchführt.

3. Verfahren nach Anspruch 1,
dadurch gekennzeichnet,
daß man die Polymerisation in Toluol durchführt.

4. Verfahren nach Anspruch 3,
dadurch gekennzeichnet,
daß man für die Polymerisation eine Temperatur von 85 bis 120 °C einstellt.

5. Verfahren nach den Ansprüchen 1 bis 4,
dadurch gekennzeichnet,
daß man die Polymerisation in Gegenwart von 0,3 bis 5 % Dispersionsmittel, bezogen auf Maleinsäureanhydrid, durchführt.

6. Verfahren nach Anspruch 5,
dadurch gekennzeichnet,
daß man in Gegenwart von Ethylen-Vinylacetat-Copolymeren arbeitet.

7. Verfahren nach den Ansprüchen 1 bis 6,
dadurch gekennzeichnet,
daß man nach der Reaktion das Polymerisationsprodukt durch Filtration abtrennt.

**Claims**

1. A process for the preparation of pulverulent polymaleic anhydride from a solution of maleic anhydride by carrying out the polymerisation in an aromatic solvent using a from 36 to 50% strength maleic anhydride solution, adding less than 20%, based on maleic anhydride, of a free-radical former and separating off the homopolymer as a powder after the reaction, characterised in that the polymerisation is carried out in the presence of a dispersant.

2. A process according to claim 1, characterised in that the polymerisation is carried out using dibenzoyl peroxide.

3. A process according to claim 1, characterised in that the polymerisation is carried out in toluene.

4. A process according to claim 3, characterised in that the polymerisation is carried out at a temperature of from 85 to 120°C.

5. A process according to any of claims 1 to 4, characterised in that the polymerisation is carried out in the presence of from 0.3 to 5%, based on maleic anhydride, of a dispersant.

5

6. A process according to claim 5, characterised in that an ethylene-vinyl acetate copolymer is present.

7. A process according to any of claims 1 to 6, characterised in that the polymerisation product is separated off by filtration after the reaction.

**Revendications**

1. Procédé de préparation à l'état pulvérulent de poly-anhydrides de l'acide maléïque, à partir de solutions d'anhydride d'acide maléïque, procédé dans lequel on effectue la polymérisation dans un solvant aromatique, en utilisant une solution à 36 - 50 % d'anhydride d'acide maléïque, en ajoutant, relativement à l'anhydride d'acide maléïque, moins de 20 % de formateurs de radicaux et en séparant l'homopolymère à l'état de poudre après la réaction,
caractérisé par le fait que l'on effectue la polymérisation en présence d'un dispersif.

2. Procédé selon la revendication 1,
caractérisé par le fait que l'on effectue la polymérisation avec du peroxyde de dibenzoyle.

3. Procédé selon la revendication 1,
caractérisé par le fait que l'on effectue la polymérisation dans du toluène.

4. Procédé selon la revendication 3,
caractérisé par le fait que pour la polymérisation, on établit une température de 85 à 120° C.

5. Procédé selon les revendications 1 à 4,
caractérisé par le fait que l'on effectue la polymérisation en présence de 0,3 à 5 % de dispersif, relativement à l'anhydride d'acide maléïque.

6. Procédé selon la revendication 5,
caractérisé par le fait que l'on travaille en présence de copolymères d'éthylène et d'acétate de vinyle.

7. Procédé selon les revendications 1 à 6,
caractérisé par le fait que l'on sépare le produit de polymérisation par filtration après la réaction.